# EUROPÄISCHE PATENTANMELDUNG

(11) **EP 1 087 116 A2**
(43) Veröffentlichungstag der Anmeldung: **28.03.2001**
(21) Anmeldenummer: 00117603.1
(22) Anmeldetag: 16.08.2000
(51) Int. Cl.: F02B 63/00, F02B 77/08

(54) **Verfahren zur Lastregelung bei einer Wärmekraftmaschine mit Stromgenerator**

(30) Priorität: 11.09.1999 DE 19943614
(71) Anmelder: ROBERT BOSCH GMBH, 70442 Stuttgart (DE)
(72) Erfinder: Laqua, Ekkehard, 68794 Oberhausen (DE); Lehr, Walter, 70499 Stuttgart (DE); Kirner, Matthias, 70839 Gerlingen (DE)

(57) **Zusammenfassung**

Die Erfindung betrifft ein Verfahren zur Lastregelung bei einer Wärmekraftmaschine mit Stromgenerator, um bei Lastwechsel die Spannung oder die Frequenz an den Klemmen des Stromgenerators durch stets gleiche Leistungsentnahme konstant zu halten. Eine Lastregelung bei Lastwechsel unter Beibehaltung einer konstanten Spannung oder Frequenz an den Klemmen des Stromgenerators läßt sich dadurch erreichen, dass eine Elektronik (ELK) die Differenz zwischen maximalem Leistungsvermögen und anliegender elektrischer Last (EL) ermittelt, und dass diese Differenz mittels eines variablen Lastwiderstandes (LW) als Wärme auf hohem Temperaturniveau wieder dem Wärme-Kraft-Prozeß zuführbar ist.

## Beschreibung

### Stand der Technik

Die Erfindung betrifft ein Verfahren zur Lastregelung bei einer Wärmekraftmaschine mit Stromgenerator, um bei Lastwechsel die Spannung oder die Frequenz an den Klemmen des Stromgenerators durch stets gleiche Leistungsentnahme konstant zu halten.

Bei Wärmekraftmaschinen, z.B. einem Stirlingmotor mit Lineargenerator, werden Konzepte zur Lastregelung verwendet, die entweder eine aufwendige Mechanik erfordern oder eine äußere elektrische Last verwenden, um die Spannung (bei rotierenden Maschinen auch die Frequenz) an den Klemmen des Stromgenerators konstant zu halten, wie die US 5,385,021 und die US 5,502,968 zeigen.

Die erforderliche Mechanik ist nicht nur kostenintensiv, sondern auch störanfällig. Die äußere elektrische Last wandelt hochwertigen elektrischen Strom in niederwertige Wärme um und ist daher unwirtschaftlich.

Es ist Aufgabe der Erfindung, ein Verfahren der eingangs erwähnten Art zu schaffen, das ohne teuere, störanfällige Mechanik realisiert und die überschüssige elektrische Energie auf einfache Weise dem Wärme-Kraft-Prozeß zugeführt werden kann.

Diese Aufgabe wird nach der Erfindung dadurch gelöst, dass eine Elektronik die Differenz zwischen maximalem Leistungsvermögen und anliegender elektrischer Last ermittelt, und dass diese Differenz mittels eines variablen Lastwiderstandes als Wärme auf hohem Temperaturniveau wieder dem Wärme-Kraft-Prozeß zuführbar ist.

Die nicht von einer Last verbrauchte elektrische Energie wird im Wärme-Kraft-Prozeß gehalten.

Mit einer betriebssicher arbeitenden Elektronik kann die Differenz zwischen dem maximalen Leistungsvermögen der Wärmekraftmaschine und der gerade vorliegenden Last schnell und sicher ermittelt werden. Daraus läßt sich über einen zugeordneten variablen Lastwiderstand diese Leistungsdifferenz auf hohem Temperaturniveau wieder dem Wärme-Kraft-Prozeß zuführen.

Dabei kann dies auf unterschiedliche Art erfolgen. So ist eine Ausgestaltung dadurch gekennzeichnet, dass bei einer Wärmekraftmaschine mit Stirlingmotor und Erhitzerkopf der variable Lastwiderstand als Heizwiderstand den Erhitzerkopf direkt beheizt.

Eine andere Möglichkeit ist dadurch gegeben, dass der variable Lastwiderstand als Heizwiderstand das der Wärmekraftmaschine zugekehrte Brennstoff-Luftgemisch erwärmt.

Nach einer weiteren Ausgestaltung ist zudem vorgesehen, dass zur Vermeidung eines Anstieges der Temperatur am Erhitzerkopf die Brennstoffzufuhr zur Wärmekraftmaschine reduzierbar ist.

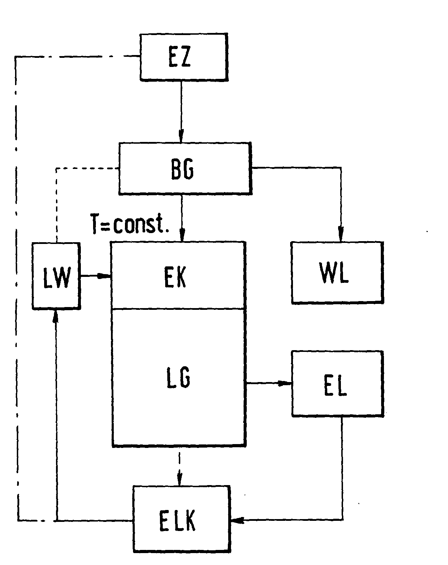

Die Erfindung wird anhand eines in der Zeichnung dargestellten Prinzipschaltbildes näher erläutert.

In dem Prinzipschaltbild sind von der Wärmekraftmaschine mit EK der Erhitzerkopf des Stirlingmotors und mit LG der als Lineargenerator ausgebildete Stromgenerator gekennzeichnet. Ihre Wirkungsweise im Wärme-Kraft-Prozeß ist bekannt und braucht daher nicht näher erläutert zu werden. Aus dem zugeführten Brennstoff-Luftgemisch BG wird ein Teil der bei der Verbrennung erzeugten Wärme als Wärmelast WL verbraucht, während der Stromgenerator LG an seinen Klemmen mit einer sich ändernden elektrischen Last EL belastet wird. Eine Elektronik ELK ermittelt nun die tatsächlich abgenommene elektrische Last EL mit dem maximalen Leistungsvermögen der Wärmekraftmaschine, wie die Pfeile zwischen dem Stromgenerator LG und der Elektronik ELK und zwischen der elektrischen Last EL und der Elektronik ELK andeuten. Die Elektronik ELK steuert einen variablen Lastwiderstand LW so, dass diese Differenzenergie bei konstanter Belastung des Stromgenerators LG als Wärme auf hohem Temperaturniveau wieder dem Wärme-Kraft-Prozeß der Wärmekraftmaschine zugeführt wird. Dabei kann, wie der Pfeil zwischen dem Lastwiderstand LW und dem Erhitzerkopf EK andeutet, direkt zur Aufheizung des Erhitzerkopfes EK verwendet werden.

Wie mit der punktierten Verbindung zwischen dem Lastwiderstand LW und dem Brennstoff-Luftgemisch BG angedeutet ist, kann auch das zugeführte Brennstoff-Luftgemisch BG entsprechend der ermittelten Differenz mehr oder weniger aufgeheizt, d.h vorgewärmt werden.

Wie die strichpunktierte Verbindung zwischen der Elektronik ELK und der Energiezufuhr EZ angedeutet ist, kann in Abhängigkeit von der ermittelten Differenz zwischen maximalem Leistungsvermögen und vorliegender elektrischer Last EL der Wärme-Kraftmaschine auch die Energiezufuhr EZ entsprechend geändert werden, um eine Überhitzung des Erhitzerkopfes EK zu vermeiden, dessen Temperatur T vorzugsweise konstant gehalten wird.

Der Aufbau der Wärme-Kraft-Maschine kann auch anders sein. Das Verfahren nach der Erfindung läßt sich jedoch sinngemäß anwenden, wenn die überschüssige elektrische Energie in entsprechender Kopplung wieder dem Wärme-Kraft-Prozeß der Wärmekraftmaschine zugeführt wird.

## Patentansprüche

1. Verfahren zur Lastregelung bei einer Wärmekraftmaschine mit Stromgenerator, um bei Lastwechsel die Spannung oder die Frequenz an den Klemmen des Stromgenerators durch stets gleiche Leistungsentnahme konstant zu halten,
dadurch gekennzeichnet,
dass eine Elektronik (ELK) die Differenz zwischen maximalem Leistungsvermögen und anliegender elektrischer Last (EL) ermittelt, und
dass diese Differenz mittels eines variablen Lastwiderstandes (LW) als Wärme auf hohem Temperaturniveau wieder dem Wärme-Kraft-Prozeß zuführbar ist.

2. Verfahren nach Anspruch 1,
dadurch gekennzeichnet,
dass bei einer Wärmekraftmaschine mit Stirlingmotor und Erhitzerkopf (EK) der variable Lastwiderstand (LW) als Heizwiderstand den Erhitzerkopf (EK) direkt beheizt.

3. Verfahren nach Anspruch 1,
dadurch gekennzeichnet,
dass der variable Lastwiderstand (LW) als Heizwiderstand das der Wärmekraftmaschine zugekehrte Brennstoff-Luftgemisch (BG) erwärmt.

4. Verfahren nach einem der Ansprüche 1 bis 3,
dadurch gekennzeichnet,
dass zur Vermeidung eines Anstieges der Temperatur am Erhitzerkopf (EK) die Brennstoffzufuhr zur Wärmekraftmaschine reduzierbar ist.
